# EUROPEAN PATENT SPECIFICATION

(11) **EP 1 239 358 B1**
(45) Date of publication and mention of the grant of the patent: **13.12.2006**
(21) Application number: 01480106.2
(22) Date of filing: 26.10.2001
(51) Int. Cl.: G06F 1/00

(54) **Security system for preventing a personal computer from being stolen or used by unauthorized people**
Sicherheitssystem zur Verhinderung des Diebstahls und der Nutzung eines Personalcomputers durch unberechtigte Benutzer
Système de sécurité pour empêcher le vol et l'utilisation d'un ordinateur personnel de la part d'une personne non autorisée

(30) Priority: 15.02.2001 EP 01480010
(43) Date of publication of application: 11.09.2002
(73) Proprietor: Lenovo (Singapore) Pte. Ltd., Singapore 486048 (SG)
(72) Inventor: Fieschi, Jacques, 06700 Saint Laurent du Var (FR); Le Pennec, Jean-Francois, 06100 Nice (FR)
(74) Representative: Schäfer, Horst

(56) References cited:
- WO-A-01/01362
- GB-A- 2 303 173
- US-A- 5 406 261
- READE L: "KEEPING TRACK OF YOUR LAPTOP. PCS AND LAPTOPS ARE VERY EASY TO STEAL. BUT AN ANTI THEFT DEVICE, BASED ON A RADIO PAGER, MAY CHANGE ALL THAT" NEW ELECTRONICS, INTERNATIONAL THOMSON PUBLISHING, LONDON, GB, vol. 29, no. 17, 8 October 1996 (1996-10-08), page 91 XP000631399 ISSN: 0047-9624

## Description

### Technical field

The present invention relates to systems at the disposal of users to prevent their personal computer such as portables or notebooks to be stolen or hacked and relates in particular to a security system for preventing a personal computer from being stolen or used by unauthorized people.

### Background

As personal computers are targets for hackers and thieves, passwords are used to protect the vital data or prevent the computer from being used by unauthorized people. These passwords are in conjunction with encryption and authentication keys used to establish secure communications between computers. It is possible today to install a program in the computer that will encrypt sensitive data so that these data cannot be read by anyone who does not have the unlocking key. But it is necessary to store the key somewhere, and if this key is not complex, it will be found.

Despite the constant development of new technologies, passwords are still the most common security tools; they are also the most abused, and often the easiest for an attacker to break. Passwords present a kind of security paradox. The best passwords are the most difficult to guess: long and random. Unfortunately, these are also the most difficult to remember. Moreover, most experts strongly recommend to use different passwords for each e-mail, e-commerce, or other account, and that you change them regularly. As a result, most people either choose easily guessable passwords, or write them down where they can be copied or stolen.

The answer to this conundrum is to use password safes. These programs provide a space to store the long, complex, or random passwords, and then encrypts them so that they cannot be stolen. Some password safes will even generate random passwords for you. But they are located on your disk and need also a password to activate the software.

For preventing a PC from being stolen, a standalone alarm system can be used. It is implemented on a PC card which is used as an intermediate device for connecting to the monitor and printer via a cable and special security tabs. If anyone disconnects the cables or takes apart the PC or if the power is off and someone attempts to use the computer without entering a special electronic security key, a deafening alarm sounds. But, such a system is efficient only when the user or someone else can hear the alarm. If nobody is present, the thief has time enough to stop the alarm or even if the alarm is not stopped, to escape with the PC.

International Patent Application WO 01 01362 entitled "Security Device" discloses a security device for equipment comprising a detector for detecting a security breach. A signal generator transmits an alarm signal in response to a signal from the detector (40, 42). In preferred embodiments, the signal generator transmits a GSM signal. Examples are described in which the signal generator transmits information which enables the device to be located and tracked.

US Patent Application 5,406,261 entitled "Computer security apparatus and method" discloses a system for preventing unauthorized access to a computer system by controlling power distribution to components within the computer system by a remotely controllable switch. An authorized computer user utilizes a radio frequency, infrared, ultrasonic or other type of wireless coded signal transmitter to send coded signals to a matching wireless receiver within the computer system that controls the power distribution switch. The computer user may additionally set an alarm that will sound if the computer system is tampered with or attempted to be used when disabled. Highly sensitive data is protected from being compromised by disabling the read circuits of the computer system data storage memory and for ultra critical data, the data storage system may be rendered permanently inoperative.

UK Patent Application GB 2 303 173 entitled "Computer Security Module" discloses a security device for electrical or electronic equipment e.g. computer - comprising a sealed unit of dye with rupture lines, rechargeable batteries, an audible alarm, a gas cartridge, a gas motor, and an electronic module. The security module comprises a monitoring device which detects deviation from normal use of equipment, sounding alarm and releasing dye over components of the equipment. The monitoring means may include light, motion and spatial detector.

Publication entitled "Keeping Track of your Laptop. PCS and Laptops are Very Easy to Steal, but an Anti Theft Device, Based on a Radio Pager, May Change all that" (Reade L, New Electronics, International Thomson Publishing, London, GB, vol. 29, no. 17, October 8, 1996 page 91 XP000631399 ISSN: 0047-9624) discloses a computer security device part of the hardware and attached to the mother board. This security system acts as a tracking device for a stolen computer. At the same time, it makes data on the computer inaccessible to the thief, who will probably then dump the computer, increasing the chance that it will be recovered and returned to its owner. A computer containing the device is registered with an airtime company in much the same way that a standard pager would be. If the computer is stolen, the airtime company is informed and will send out a paging signal that activates the device.

### Summary of the invention

Accordingly, the main object of the invention is to provide a security system to be installed on existing personal computers having at least a location for a PCMCIA card, such a system enabling the authorized user to be automatically warned if anyone attempts to steal its PC or to use it without being authorized.

The invention relates therefore to a security system for preventing a personal computer (PC) including at least a location in the PC adapted to receive a PCMCIA card from being used by unauthorized people comprising an extractable card having connection means adapted to insert the extractable card into the location for receiving a PCMCIA card and including processing means and wireless emitting means for remotely transmitting alarm information relative to the PC, and program means stored in the memory of the PC for communicating with the processing means in order to activate selected security functions.

### Brief description of the drawings

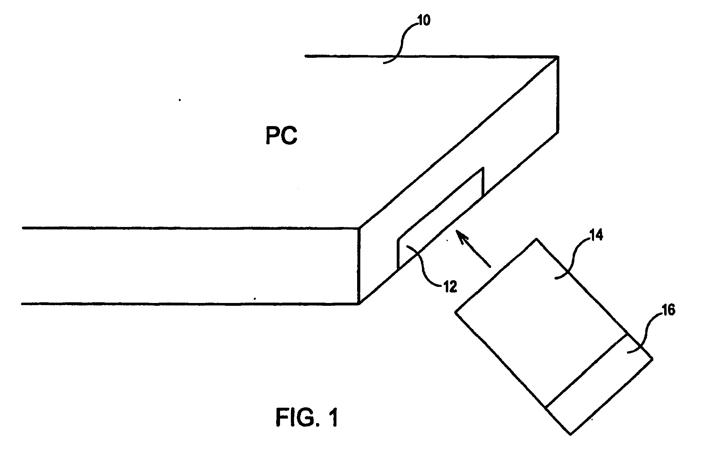

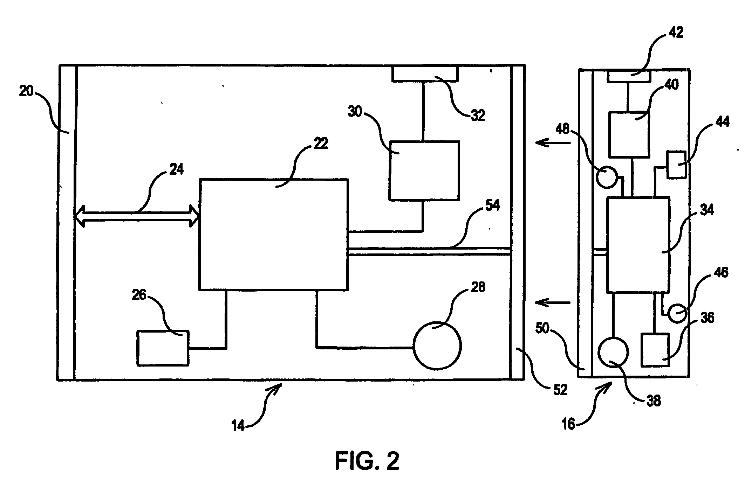

The above and other objects, features and advantages of the invention will be better understood by reading the following more particular description of the invention in conjunction with the accompanying drawings wherein :
■ Fig. 1 is a schematic representation of a personal computer having a PCMCIA slot enabling to insert an extractable card and a removable key connected thereto according to the invention.
■ Fig. 2 is a block-diagram representing all the features included in the extractable card and the removable key according to the invention.

### Detailed description of the invention

In reference to Fig. 1, the security system according to the invention can be implemented with a personal computer 10 having an interface slot 12 for inserting a PCMCIA card.

Today, all personal computers have such a PCMCIA interface and also include a battery to support the PC when it is not connected to an AC plug. Such PCs are running an operating system stored on the hard disk.

According to the invention, an extractable card 14 with necessary means for implementing a plurality of security features can be inserted into the slot 12. This extractable card includes a removable key 16 for enabling the user to receive security signals when he is remote from the PC as explained in the following description.

As illustrated in Fig. 2, the extractable card 14 includes a connector 20 to connect the card to the PCMCIA connection, a processor 22 linked to the connector 20 by a bus 24 and adapted to control all the functions of the extractable card, a battery 26, a buzzer 28, a radio emitter 30 and its antenna 32. The removable key 16 also includes a processor 34, a battery 36, a buzzer 38. Furthermore, it includes a radio receiver 40 and its antenna 42 to receive radio signals emitted by the radio emitter 30 of the extractable card 14, and some other features like a motion detector 44, a LED 46 and press button 48 the operation of which will be explained in the following. The removable key 16 is connected to extractable card 14 by means of a connector 50 adapted to be firmly connected with a connector 52 of the extractable card. Note that the extractable card processor 22 and the removable key processor 34 are connected together by means of a bus 54 when the removable key is attached to the extractable card.

In combination with the extractable card and the removable key, the security system according to the invention also comprises a security program stored in the memory of the PC with the operating system of this one in order to activate the different security functions associated with the extractable card and the removable key.

The main security functions which are detailed hereafter are the following :
- Secure operating system boot,
- Encryption/decryption of selected files
- Motion detector mode
- Power detection mode
- Secure communication between the extractable card and the removable key

### 1) Secure operating system boot

When this function is activated through the security program, the PC will only boot if the extractable card with the attached key 16 is inserted in the PCMCIA slot.

At the boot time, the operating system of the PC requests access securely to the extractable card and this one grants authorization only if the removable key is connected to the extractable card inasmuch as the removable key provides a one time synchronized unique password to the extractable card. This one validates the one time password of the removable key by using its one time password and as a result sends the boot authorization to the PC. Note that, after a configurable number of consecutive unsuccessful trials, the security program will destroy itself.

### 2. Encryption/decryption of selected files

Selected filed can be defined in the security program as needed to be dynamically encrypted/decrypted whenever they are used. However, the encryption/decryption will not be made in the PC itself because the PC software can be hacked or tricked by hackers (the software would be visible in the hard disk data). Instead, such a processing is made by the processor 22 of the extractable card. For this, the encryption process will use a 128 bits encryption key available only in the removable key 16 after authentication through the use of the one time password as explained above. Thus, the PC could be used by an external user in agreement with the PC owner, but sensitive files cannot be accessed even with some tricky software because they cannot be decrypted.

Note that, after authentication, the extractable key and the removable key connected together exchange information regularly in order to synchronize the one time password. This process is necessary to avoid a discrepancy due to clock shift over a long period of time between the clocks of both extractable card and removable key. An regular authentication is also necessary between the PC and the extractable card and a similar regular exchange of information takes place between them in order to synchronize the one time password used to encrypt/decrypt the exchanged data.

### 3. Motion detector mode

When this function is set in the security program, the removable key 16 has to be connected to the extractable card. Any motion above a configured threshold is detected by motion detector 44 of the removable key 16. When the alarm is raised because a motion is detected (e.g. When unauthorized people try to steal the PC) the actions configurable in the security program are :
- Beep the PC buzzer
- Beep the buzzer 28 of extractable card 14,
- Beep the buzzer 38 of removable key 16,
- Freeze the PC.

### 4. Power detection mode

When this mode is set in the security program, an alarm will be activated when either the AC plug is removed, or the PC battery is removed or the PC is powered off or the extractable card is removed.

The actions configurable in the security program are the following :
- Beep the PC buzzer
- Beep the buzzer 28 of extractable card 14,
- Beep the buzzer 38 of removable key 16,
- Freeze the PC.

### 5. Secure communication mode between the extractable card and the removable key

This mode is activated when the removable key 16 is removed from the extractable card 14 by the PC owner who is at a location remote from his PC.

In the two preceding cases when the motion detector mode or the power detection mode is set, the extractable card 14 transmits encrypted data based on the one time password mentioned above to the removed key 16 by means of the radio emitter 30 and the antenna 32. This information is received by removable key 16 by means of the antenna 42 and the radio receiver 40. Upon reception of this information signals, the buzzer 38 of the key 16 will start beeping. If press button is pressed during at least a predetermined time, e.g. 4 seconds, the buzzer stops beeping and the LED 46 starts flashing. LED 46 will flash at a refresh rate proportional to the level of the radio signal received by antenna 42, giving thus an indication of the distance between the extractable card and the removable key so that the PC owner may assume whether his PC has been stolen or moved.

It must be noted that radio detectors may be provided at the gates of a building so that the information received by these detectors enables to detect where the stolen PC is located in the building.

In conclusion, by using the different security functions provided by the security system according to the invention, the following features can be used :
- The PC owner can get encrypted sensitive data only accessible with the removable key.
- When positioned in some location (table, desk...) and whenever the PC is significantly moved by an unauthorized person, the PC will generate an audible alarm alerting the people staying near the PC.
- When the extractable card is significantly moved, an alarm is generated to alert the remotely located PC owner who has the removable key with him.
- When stolen in a room of a building, the PC can be identified through the use of radio detectors located at the gates of the building.
- If a thief wants to prevent the different functions from being activated by removing either the extractable card, or the AC power, or the battery, the alarm will be raised.

## Claims

1. A security system for preventing a personal computer (10) from being used by unauthorized people, wherein:-
i) the personal computer (10) includes a location (12) adapted to receive an extractable PCMCIA card (14);
ii) the card (14) includes a connector (20) to connect the card to the location and includes processor means (22) and wireless emitting means (30) for remotely transmitting alarm information relative to the personal computer; and,
iii) program means are stored in personal computer memory means for communicating with the card processor means in order to activate selected security functions;
**characterised in that**:-
iv) a removable key (16) is connected to the extractable card (14) by means of a connector (50) adapted to connect with a connector (52) of the extractable card;
v) the removable key includes a wireless receiver (40) for receiving the alarm information when the removable key has been removed from the extractable card;
vi) the removable key (16) includes a motion detector (44);
vii) the removable key (16) also includes a buzzer (38) arranged to start beeping when the motion detector (44) has detected a motion of the personal computer (10) when the removable key is connected to the extractable card; and,
viii) the removable key (16) further includes a press button (48) and a LED (46) so that, when the removable key is removed from the extractable card (14), the removable key buzzer (38) stops beeping as soon as the press button is pressed.

2. A security system according to claim 1 and further **characterized in that** the LED (46) starts flashing as soon as the press button (48) has been pressed.

3. A security system according to claim 1 or claim 2 and further **characterized in that** the program means are set for selected files to be encrypted/decrypted by the card processor means (22) by using an encryption key available in the removable key.

4. A security system according to claim 3 and further **characterized in that** the program means are set for selected files to be encrypted/decrypted by the card processor means (22) by using the encryption key available in the removable key (16).

5. A security system according to any one of claims 1 to 4 and further **characterized in that:-**
i) the program means are set for the personal computer (10) to boot only if the extractable card (14) with the attached removable key (16) is inserted into the location (12) and after receiving authorization from the extractable card, the authorization being given after the extractable card has validated a one time password sent from the removable key to the extractable card and the validation is performed by using the one time password of the removable key; and,
ii) the extractable card and the removable key exchange information regularly in order to synchronize their one time passwords.

## Patentansprüche

1. Sicherheitssystem zur Verhinderung der Nutzung eines Personalcomputers (10) durch unberechtigte Benutzer, wobei:
i) der Personalcomputer (10) einen Ort (12) umfasst, der für die Aufnahme einer herausziehbaren PCMCIA Karte (14) geeignet ist;
ii) die Karte (14) eine Steckverbindung (20) umfasst, um die Karte mit dem Ort zu verbinden und Prozessormittel (22) und drahtlose Abstrahlmittel (30) umfasst, um Alarminformationen bezüglich des Personalcomputers dezentral zu übermitteln; und,
iii) Programmmittel zur Kommunikation mit den Prozessormitteln der Karte in Speichermitteln des Personalcomputers gespeichert sind, um ausgewählte Sicherheitsfunktionen zu aktivieren;
**dadurch gekennzeichnet, dass**:
iv) ein entfernbarer Schlüssel (16) mit der herausziehbaren Karte (14) verbunden ist mittels einer Steckverbindung (50), die geeignet ist, sich mit einer Steckverbindung (52) der herausziehbaren Karte zu verbinden;
v) der entfernbare Schlüssel einen drahtlosen Empfänger (40) umfasst für den Empfang der Alarminformation, wenn der entfernbare Schlüssel von der herausziehbaren Karte entfernt wurde;
vi) der entfernbare Schlüssel (16) einen Bewegungsmelder (44) umfasst;
vii) der entfernbare Schlüssel (16) auch einen Summer (38) umfasst, der eingerichtet ist um mit Piepsen zu beginnen, wenn der Bewegungsmelder (44) eine Bewegung des Personalcomputers (10) wahrgenommen hat, während der entfernbare Schlüssel mit der herausziehbaren Karte verbunden ist; und,
viii) der entfernbare Schlüssel (16) weiterhin eine Drucktaste (48) und eine LED (46) umfasst, so dass, wenn der entfernbare Schlüssel von der herausziehbaren Karte (14) entfernt wird, der Summer (38) des entfernbaren Schlüssels das Piepsen beendet, sobald die Drucktaste gedrückt wird.

2. Sicherheitssystem gemäß Anspruch 1 und weiterhin **dadurch gekennzeichnet, dass** die LED (46) zu blinken beginnt, sobald die Drucktaste (48) gedrückt wurde.

3. Sicherheitssystem gemäß Anspruch 1 oder Anspruch 2 und weiterhin **dadurch gekennzeichnet, dass** die Programmmittel eingestellt sind für ausgewählte Dateien, die durch die Prozessormittel (22) der Karte unter Verwendung eines in dem entfernbaren Schlüssel zur Verfügung stehenden Verschlüsselungsschlüssels verschlüsselt/entschlüsselt werden.

4. Sicherheitssystem gemäß Anspruch 3 und weiterhin **dadurch gekennzeichnet, dass** die Programmmittel eingestellt sind für ausgewählte Dateien, die durch die Prozessormittel (22) der Karte unter Verwendung des in dem entfernbaren Schlüssel (16) zur Verfügung stehenden Verschlüsselungsschlüssels verschlüsselt/entschlüsselt werden.

5. Sicherheitssystem gemäß jedem der Ansprüche 1 bis 4 und weiterhin **dadurch gekennzeichnet, dass**:
i) die Programmmittel für den Personalcomputer (10) eingestellt sind um nur zu booten, wenn die herausziehbare Karte (14) mit dem angeschlossenen entfernbaren Schlüssel (16) in den Ort (12) eingesetzt wird und nachdem die Berechtigungszuweisung von der herausziehbaren Karte empfangen wurde, wobei die Berechtigungszuweisung erteilt wird nachdem die herausziehbare Karte ein Einmalpasswort für gültig erklärt hat, das von dem entfernbaren Schlüssel an die herausziehbare Karte geschickt wurde und die Gültigkeitsprüfung unter Verwendung des Einmalpassworts des entfernbaren Schlüssels ausgeführt wird; und,
ii) die herausziehbare Karte und der entfernbare Schlüssel regelmäßig Informationen austauschen, um ihre Einmalpassworte zu synchronisieren.

## Revendications

1. Système de sécurité pour empêcher un ordinateur personnel (10) d'être utilisé par une personne non autorisée, dans lequel:
i) l'ordinateur personnel (10) comprend un emplacement (12) adapté pour recevoir une carte PCMCIA extractible (14);
ii) la carte (14) comprend un connecteur (20) servant à connecter la carte à l'emplacement et comprend des moyens de processeur (22) et des moyens d'émission sans fil (30) pour transmettre à distance une information d'alarme relative à l'ordinateur personnel; et
iii) des moyens de programme sont stockés dans des moyens de mémoire de l'ordinateur personnel pour communiquer avec les moyens de processeur de la carte de manière à activer des fonctions de sécurité sélectionnées; **caractérisé en ce que**:
iv) une clé amovible (16) est connectée à la carte extractible (14) aux moyens d'un connecteur (50) adapté pour se connecter à un connecteur (52) de la carte extractible;
v) la clé amovible (16) comprend un récepteur sans fil (40) servant à recevoir l'information d'alarme lorsque la clé amovible a été retirée de la carte extractible;
vi) la clé amovible (16) comprend un détecteur de mouvement (44);
vii) la clé amovible (16) comprend également une sonnerie (38) conçue pour émettre un signal sonore lorsque le détecteur de mouvement (44) a détecté un mouvement de l'ordinateur personnel (10) lorsque la clé amovible est connectée à la carte extractible; et
viii) la clé amovible (16) comprend également un bouton-poussoir (48) et une diode électroluminescente (46) de sorte que, lorsque la clé amovible est retirée de la carte extractible (14), la sonnerie (38) de la clé amovible s'arrête d'émettre le signal sonore dès que le bouton-poussoir est actionné.

2. Système de sécurité selon la revendication 1 et **caractérisé de plus en ce que** la diode électroluminescente (46) commence à briller dès que le bouton-poussoir (48) a été actionné.

3. Système de sécurité selon la revendication 1 ou la revendication 2 et **caractérisé de plus en ce que** les moyens de programme sont réglés pour des fichiers sélectionnés à chiffrer ou à déchiffrer par les moyens de processeurs (22) de la carte en utilisant une clé de chiffrement disponsible dans la clé amovible.

4. Système de sécurité selon la revendication 3 et **caractérisé de plus en ce que** les moyens de programme sont réglés pour des fichiers sélectionnés à chiffrer ou à déchiffrer par les moyens de processeur (22) de la carte en utilisant la clé de chiffrement disponsible dans la clé amovible (16).

5. Système de sécurité selon l'une quelconque des revendications 1 à 4 et **caractérisé de plus en ce que**:
i) les moyens de programme sont réglés pour que l'ordinateur personnel (10) s'initialise uniquement si la carte extractible (14) avec la clé amovible attachée (16) et insérée dans l'emplacement (12) et après réception de l'autorisation en provenance de la carte extractible (14), l'autorisation étant donnée après que la carte extractible (14) a validé un mot de passe à usage unique envoyé par la clé amovible à la carte extractible et que la validation est réalisée en utilisant le mot de passe à usage unique de la clé amovible; et
ii) la carte extractible et la clé amovible échangent régulièrement des informations de manière à synchroniser leurs mots de passe à usage unique.
